# EUROPÄISCHE PATENTANMELDUNG

(11) **EP 4 656 328 A2**
(43) Veröffentlichungstag der Anmeldung: **03.12.2025**
(21) Anmeldenummer: 25208606.1
(22) Anmeldetag: 14.10.2025
(51) Int. Cl.: B23Q 1/52, B23Q 1/54, B23Q 11/00

(54) **WERKSTÜCKTISCH UND VERFAHREN ZUR SCHWINGUNGSDÄMPFUNG FÜR EINEN WERKSTÜCKTISCH**

(71) Anmelder: Maschinenfabrik Berthold Hermle AG, 78559 Gosheim (DE)
(72) Erfinder: Schwarzwälder, Benjamin, 78662 Bösingen (DE); Mattes, Wilfried, 78570 Mühlheim (DE); Bernhard, Franz-Xaver, 78549 Spaichingen (DE)
(74) Vertreter: Patentanwälte Magenbauer & Kollegen Partnerschaft mbB

(57) **Zusammenfassung**

Die Erfindung betrifft einen Werkstücktisch (1) für eine Werkzeugmaschine, mit einem Grundträger (11), der eine Maschinenschnittstelle (15, 16) aufweist, die für eine Kopplung mit einem Maschinengestell einer Werkzeugmaschine ausgebildet ist, und der eine Trägeraufnahme (19) zur Kopplung mit einem Werkstückträger (51) aufweist, sowie mit einem Werkstückträger (51), der einen Trägerkörper (52), eine Hilfsmasse (53) und ein Zugstück (54) aufweist, wobei der Trägerkörper (52) an einer Oberseite (71) mit einer Werkstückaufnahme (56) zur Aufspannung eines Werkstücks versehen ist und an einer Unterseite einen Kupplungsabschnitt (59) zur Kopplung mit der Trägeraufnahme (19) aufweist, wobei die Hilfsmasse (53) linearbeweglich auf einer Berührfläche (61) des Trägerkörpers (52) gelagert ist und wobei das Zugstück (54) für eine Normalkraftübertragung zwischen Trägerkörper (52) und Hilfsmasse (53) ausgebildet ist, wobei die Hilfsmasse (53) einen größenveränderlichen Kontaktbereich (62; 74) mit der Berührfläche (61) bestimmt, so dass die Hilfsmasse (53) und die Berührfläche (61) einen Hilfsmassendämpfer mit einstellbarer Dämpfungswirkung bilden.

## Beschreibung

Die Erfindung betrifft einen Werkstücktisch, insbesondere einen Schwenkrundtisch, für eine Werkzeugmaschine, mit einem Grundträger, der eine Maschinenschnittstelle aufweist, die für eine Kopplung mit einem Maschinengestell einer Werkzeugmaschine ausgebildet ist, und der eine Trägeraufnahme zur Kopplung mit einem Werkstückträger aufweist, sowie mit einem Werkstückträger, der einen Trägerkörper, eine Hilfsmasse und ein Zugstück aufweist, wobei der Trägerkörper an einer Oberseite mit einer Werkstückaufnahme zur Aufspannung eines Werkstücks versehen ist und an einer Unterseite einen Kupplungsabschnitt zur Kopplung mit der Trägeraufnahme aufweist, wobei die Hilfsmasse linearbeweglich auf einer Berührfläche des Trägerkörpers gelagert ist und wobei das Zugstück für eine Normalkraftübertragung zwischen Trägerkörper und Hilfsmasse ausgebildet ist. Ferner betrifft die Erfindung ein Verfahren zur Schwingungsdämpfung für einen Werkstücktisch.

Die DE 69807529 T2 offenbart einen Werkstückhalteblock zur Verwendung in einer Maschine zur Durchführung von Arbeitsvorgängen an einem Werkstück, wobei der Halteblock umfasst: einen Werkzeugständer mit mehreren Seiten, die sich von einem unteren Bereich zu einem oberen Bereich erstrecken; ein Mittel zum Befestigen und Sichern des unteren Bereiches an einem Maschinenwerkzeughalteelement; ein Mittel zum Befestigen eines Werkstücks an wenigstens einer der Seiten und ein an dem Werkzeugständer gesichertes Dämpfungsmittel zur Dämpfung von Schwingungen, die sich anhand eines an dem Werkstück durchgeführten Arbeitsvorgangs ergeben.

Die Aufgabe der Erfindung besteht darin, einen Werkstücktisch sowie ein Verfahren zur Schwingungsdämpfung für einen Werkstücktisch bereitzustellen, mit denen eine verbesserte Schwingungsdämpfung während einer Werkstückbearbeitung ermöglicht wird.

Diese Aufgabe wird für einen Werkstücktisch der eingangs genannten Art dadurch gelöst, dass die Hilfsmasse einen größenveränderlichen Kontaktbereich mit der Berührfläche bestimmt, so dass die Hilfsmasse und die Berührfläche einen Hilfsmassendämpfer mit einstellbarer Dämpfungswirkung bilden.

Der Kontaktbereich wird durch einen unmittelbaren mechanischen Berührkontakt zwischen der Hilfsmasse und der Berührfläche bestimmt und kann einen einzigen Bereich oder eine Gruppe von mehreren über die Berührfläche verteilten Bereichen umfassen. Die Dämpfungswirkung, die mit Hilfe der Hilfsmasse erzielt werden kann, hängt insbesondere von einem Massenverhältnis, einer Steifigkeit der Hilfsmasse, einer Steifigkeit der Berührfläche und einer maximalen Reibkraft ab.

Das Massenverhältnis kann beispielsweise als Quotient zwischen einer Masse der Hilfsmasse und einer Summe der Massen des Grundträgers, des Trägerkörpers und des am Werkstückträger aufgenommenen Werkstücks ermittelt werden. Beispielhaft ist das Massenverhältnis in einem Intervall angesiedelt, dessen untere Intervallgrenze mit 0,1 und dessen obere Intervallgrenze mit 0,2 angegeben werden kann.

Die Steifigkeit des Hilfsmassedämpfers wird vorzugsweise so eingestellt, dass die Eigenfrequenz der Hilfsmasse mit einer störenden Schwingungsfrequenz, insbesondere einer Resonanzfrequenz, des Werkstücktischs inkl. Werkstück übereinstimmt. Hierbei wird davon ausgegangen, dass im Kontaktbereich zwischen Hilfsmasse und Berührfläche eine elastische Deformation zumindest der Hilfsmasse oder zumindest der Berührfläche stattfindet, so dass die Hilfsmasse bezogen auf die Berührfläche eine, vorzugsweise lineare, Relativbewegung durchführen kann, wobei diese Relativbewegung im Rahmen von elastischen Deformationen der Hilfsmasse und der Berührfläche und somit im Rahmen der Haftreibung stattfindet, während eine Gleitreibung zwischen Hilfsmasse und der Berührfläche weder noch unbedingt erforderlich ist. Die Amplitude dieser Relativbewegung hängt hierbei von den Steifigkeiten der Hilfsmasse und der Berührfläche ab, wobei eine Beeinflussung der Amplitude insbesondere durch eine Veränderung der Flächenausdehnung der Kontaktfläche bewirkt werden kann.

Darüber hinaus sind die Steifigkeiten der Hilfsmasse und der Berührfläche derart gewählt, dass durch eine Wechselwirkung zwischen Hilfsmasse und Berührfläche eine Dämpfung erzielt werden kann, so dass ein Aufschwingen der als Feder-Masse-System zu betrachtenden Kombination aus Werkstücktisch und Hilfsmasse vermieden wird. Diese Dämpfungswirkung resultiert aus der inneren Reibung, wie sie bei der elastischen Deformation von Körpern auftritt. Vorzugsweise ist das Material der Hilfsmasse oder das Material der Berührfläche derart gewählt, dass ein niedriger Elastizitätsmodul mit einer hohen inneren Reibung einhergeht.

Die Steifigkeiten der Hilfsmasse und der Berührfläche bestimmen zusammen mit der Normalkraft, die von der Hilfsmasse auf die Berührfläche übertragen wird, die Eigenfrequenz der Hilfsmasse. Die Zielsetzung für die Auswahl der Parameter: Steifigkeit der Hilfsmasse, Steifigkeit der Berührfläche, Normalkraft liegt darin, eine phasenversetzte Schwingung von Hilfsmasse und Werkstücktisch bei der Eigenfrequenz des Werkstücktischs zu bewirken, um damit eine zumindest teilweise Tilgung von Schwingungen des Werkstücktischs zu bewirken.

Gegebenenfalls kann, insbesondere bei einer geringen Normalkraft zwischen Hilfsmasse und Berührfläche, eine Gleit-Relativbewegung auftreten, bei der nur eine erheblich geringere Dämpfungswirkung verglichen mit der vorstehend beschriebenen Haftreibung erzielt werden kann. Daher ist es vorteilhaft, wenn die Normalkraft zwischen Hilfsmasse und Berührfläche so gewählt wird, dass in der praktischen Anwendung der Hilfsmasse keine Überschreitung einer maximalen Reibkraft, die zwischen Hilfsmasse und Berührfläche übertragen werden kann, auftritt. Die maximale Reibkraft, die zwischen der Hilfsmasse und der Berührfläche übertragen werden kann, hängt von einem Reibungskoeffizienten für die Materialpaarung Hilfsmasse/Berührfläche, von einer Normalkraft, die zwischen der Hilfsmasse und der Berührfläche wirkt, und von einer Flächenausdehnung des Kontaktbereichs ab. Dabei wird der Reibungskoeffizient sowohl von den Materialien, aus denen die Hilfsmasse und die Berührfläche hergestellt sind, als auch von zusätzlichen Variablen wie beispielsweise Schmiermitteln und/oder Verschmutzungen bestimmt, die im Kontaktbereich vorhanden sind. Vorzugsweise ist vorgesehen, dass die Hilfsmasse aus Metall, insbesondere Stahl, oder Beton oder einem Kunststoff mit hoher Dichte oder einer Kombination von unterschiedlichen Materialien, die unterschiedliche Dichten aufweisen können, hergestellt ist. Die Berührfläche wird entweder durch eine Oberfläche des Trägerkörpers oder durch Dämpfungsmaterial, das auf dem Trägerkörper aufliegt, bestimmt. Der Trägerkörper ist typischerweise aus Metall, insbesondere Stahl, hergestellt. Sofern zwischen der Hilfsmasse und dem Trägerkörper ein Dämpfungsmaterial angeordnet ist, handelt es sich typischerweise um ein Kunststoffmaterial.

Die Normalkraft ist diejenige Kraft, die von der Hilfsmasse in Normalenrichtung auf die Berührfläche wirkt. Die Normalkraft wird ausgehend vom Trägerkörper über das Zugstück auf die Hilfsmasse eingeleitet. Sofern die Berührfläche eben ausgebildet und horizontal ausgerichtet ist, kann die Normalkraft auch als Vertikalkraft beschrieben werden. Vorzugsweise ist das Zugstück derart ausgebildet und ausgerichtet, dass zumindest in einer Ruhestellung der Hilfsmasse gegenüber dem Trägerkörper ausschließlich eine Normalkraft übertragen wird. In einer Funktionsstellung der Hilfsmasse, die auch als Auslenkungsstellung gegenüber der Ruhestellung beschrieben werden kann, können zusätzlich Querkräfte zwischen Hilfsmasse und Trägerkörper über das Zugstück übertragen werden, die zu einer zusätzlichen Dämpfungswirkung beitragen können. Das Produkt aus Reibungskoeffizient und Normalkraft ist die Reibkraft, wobei für die Betrachtung der Dämpfungswirkung, die mit Hilfe der Hilfsmasse erzielt werden kann, insbesondere die Gleitreibkraft von Interesse ist, die bei einer Relativbewegung zwischen Hilfsmasse und Berührfläche auftritt. Ferner ist für die zu erzielende Dämpfungswirkung auch die Größe des Kontaktbereichs von Bedeutung, da aufgrund von Materialeigenschaften der Hilfsmasse und der Berührfläche eine maximale Flächenlast oder Flächenpressung nicht überschritten werden darf, um Beschädigungen an der Hilfsmasse und/oder an der Berührfläche zu vermeiden. Erfindungsgemäß wird für eine höhere Dämpfungswirkung sowohl eine Erhöhung der Normalkraft als auch eine Vergrößerung des Kontaktbereichs vorgesehen. Vorzugsweise wird die Vergrößerung des Kontaktbereichs durch eine zumindest bereichsweise elastische Deformation der Hilfsmasse und/oder der Berührfläche erzielt. In der Praxis ist davon auszugehen, dass die Hilfsmasse aus einem Werkstoff mit hohem Elastizitätsmodul wie beispielsweise Stahl oder Beton hergestellt ist und damit im Wesentlichen als gestaltfest betrachtet werden kann und dass die Berührfläche im Vergleich zur Hilfsmasse einen deutlich niedrigeren Elastizitätsmodul aufweist und durch die Erhöhung der Normalkraft eine elastische Deformation erfährt. Durch diese elastische Deformation wird der Kontaktbereich vergrößert, womit auch die innere Reibung der Berührfläche, die bei einer Relativbewegung zwischen Hilfsmasse und Berührfläche auftritt, erhöht wird. Besonders bevorzugt ist vorgesehen, dass eine maximale Fläche des Kontaktbereichs, die sich bei bestimmungsgemäßem Gebrauch des Werkstücktischs und einer maximal zulässigen Normalkraft ergibt, wenigstens um 50 Prozent, vorzugsweise um 100 Prozent, besonders bevorzugt um 200 Prozent, insbesondere um 400 Prozent, größer als eine minimale Fläche des Kontaktbereichs ist, die sich allein durch die Gewichtskraft der Hilfsmasse bei Auflage auf der Berührfläche und ohne eine Normalkrafteinleitung mittels des Zugstücks ergibt.

Besonders bevorzugt ist vorgesehen, dass die Hilfsmasse und die Berührfläche derart aufeinander abgestimmt sind, dass eine Veränderung der Normalkraft, die vom Trägerkörper über das Zugstück auf die Hilfsmasse übertragen wird, eine proportionale Veränderung der Fläche des Kontaktbereichs einhergeht.

Die Dämpfungswirkung, die mit dem erfindungsgemäßen Werkstücktisch erzielt werden soll, wird somit einerseits durch das Massenverhältnis zwischen der Hilfsmasse und den Komponenten: Grundträger, Trägerkörper, Werkstück und andererseits durch die Reibkräfte zwischen Hilfsmasse und Berührfläche bestimmt. Die Kombination aus der Massenträgheit der Hilfsmasse mit den Reibkräften, mit denen eine Energiewandlung von Bewegungsenergie in Wärmeenergie bewirkt wird, ermöglichen ein Abklingen von Schwingungen, die auf den Werkstücktisch eingeleitet werden. Die Wirkungsweise des Hilfsmassendämpfers beruht auf zwei unterschiedlichen Effekten. Die Hilfsmasse führt eine Schwingungsbewegung als Relativbewegung gegenüber dem Werkstücktisch aus, durch die eine Schwingungsdämpfung im Sinne eines Tilgers bewirkt wird. Durch diese Relativbewegung findet auch eine elastische Deformation im Kontaktbereich zwischen Hilfsmasse und Berührfläche statt, die im Wesentlichen als elastische Deformation der Berührfläche angesehen werden kann, wobei hier eine innere Reibung der deformierten Komponente, insbesondere der Berührfläche, einen zusätzlichen Dämpfungsbeitrag für die auf den Werkstücktisch aufgeprägte Schwingung leistet. Durch die Tilgerfunktion der Hilfsmasse wird eine maximale Schwingungsamplitude des Werkstücktischs, die bei der Eigenfrequenz des Werkstücktischs auftritt, in zwei geringere Nebenschwingungsamplituden aufgespalten, deren Schwingungsfrequenzen beidseitig abseits der Eigenfrequenz liegen. Durch die innere Reibung, die vorwiegend in der Berührfläche auftritt, kommt es zur Bedämpfung der Nebenschwingungsamplituden, so dass im Ergebnis eine geringere Schwingung des Werkstücktischs erzielt werden kann.

Vorteilhafte Weiterbildungen der Erfindung sind Gegenstand der Unteransprüche.

Zweckmäßig ist es, wenn die Berührfläche von einer Dämpfungsplatte bestimmt wird, die aus einem Kunststoffmaterial hergestellt ist und die zumindest 10 Prozent einer Projektionsfläche der Hilfsmasse auf den Trägerkörper überdeckt. Die Aufgabe der Dämpfungsplatte besteht darin, die Relativbewegung der Hilfsmasse gegenüber dem Trägerkörper möglichst stark zu bedämpfen, sodass auf den Werkstücktisch eingeleitete Schwingungen möglichst rasch abklingen können. Vorzugsweise ist das Kunststoffmaterial der Dämpfungsplatte derart ausgewählt, dass eine Übertragung von Bewegungsenergie zwischen der Hilfsmasse und der Dämpfungsplatte sowohl über Reibkräfte als auch über Deformationskräfte stattfinden kann. Dabei wird die Reibkraft zwischen der Hilfsmasse und der Dämpfungsplatte von der Normalkraft, die über das Zugstück auf die Hilfsmasse eingeleitet wird, sowie von dem Reibungskoeffizient den der Materialpaarung Hilfsmasse/Dämpfungsplatte bestimmt. Ferner kann vorgesehen sein, dass die Dämpfungsplatte aus einem Vollmaterial, insbesondere als Planparallelplatte, ausgebildet ist. Alternativ kann die Dämpfungsplatte aus einem strukturierten Material, das beispielsweise an einer Oberseite eine glatte, insbesondere ebene, Berührfläche aufweist und an einer Unterseite mit einer Wabenstruktur versehen ist, gebildet sein. Hierdurch wird einerseits eine homogene Berührfläche zur Verfügung gestellt, auf der die Hilfsmasse ohne unerwünschte Bewegungen, wie sie beispielsweise bei einer wellenförmig strukturierten Berührfläche auftreten könnten, bewegt werden kann. Andererseits wird durch die Wabenstruktur eine Erhöhung der Elastizität der Dämpfungsplatte erzielt, sodass bei einer Relativbewegung der Hilfsmasse gegenüber der Dämpfungsplatte eine elastische Deformation der Dämpfungsplatte auftreten kann, durch die zusätzlich zu den Reibungskräften auch Deformationskräfte zur Dämpfungswirkung zwischen der Hilfsmasse und der Dämpfungsplatte beitragen können. Die Dämpfungsplatte ist hinsichtlich ihrer Größe und Ausdehnung derart auf die Hilfsmasse angepasst, dass bei einer Projektion der Hilfsmasse auf den Trägerkörper zumindest 20 Prozent der hierdurch gebildeten Projektionsfläche von der Dämpfungsplatte überdeckt werden. Hierbei ist es nicht notwendig, dass die Dämpfungsplatte einstückig oder einteilig ausgebildet ist, sie kann auch aus mehreren Abschnitten, die räumlich verteilt am Trägerkörper angeordnet sind, gebildet sein.

Bevorzugt ist vorgesehen, dass die Hilfsmasse mit der Berührfläche einen größenvariablen, vorzugsweise einen keilförmig profilierten, insbesondere einen nach außen verjüngten, Arbeitsspalt begrenzt und/oder dass der Kontaktbereich angrenzend an eine Stirnfläche der Hilfsmasse angeordnet ist. Der Arbeitsspalt ist derjenige Bereich zwischen einer Unterseite der Hilfsmasse und der gegenüberliegenden Berührfläche, in dem kein mechanischer Kontakt zwischen Hilfsmasse und Berührfläche vorliegt. Sofern keine Normalkraft vom Trägerkörper mittels des Zugstücks auf die Hilfsmasse übertragen wird, wirkt lediglich eine in vertikaler Richtung nach unten gerichtete Kraftkomponente der Gewichtskraft der Hilfsmasse auf die Berührfläche. Für den Fall, dass die Berührfläche horizontal ausgerichtet ist, entspricht diese Kraftkomponente der Gewichtskraft der Hilfsmasse und der Arbeitsspalt wird durch die Geometrie der Unterseite der Hilfsmasse sowie durch die Elastizitätseigenschaften der Berührfläche, insbesondere der Dämpfungsplatte, bestimmt. Sofern mittels des Zugstücks zusätzlich zur Gewichtskraft der Hilfsmasse eine Normalkraft vom Trägerkörper auf die Hilfsmasse eingeleitet wird, kommt es zu einer Vergrößerung der Deformation der Berührfläche und zu einer Verkleinerung des Arbeitsspalts. Bevorzugt sind die Hilfsmasse und die Berührfläche, insbesondere die Dämpfungsplatte, derart aufeinander abgestimmt, dass zumindest innerhalb eines vorgegebenen Normalkraftintervalls eine proportionale Beziehung zwischen einer Normalkraftzunahme und einer Deformationszunahme gegeben ist. Besonders bevorzugt ist vorgesehen, dass die Unterseite der Hilfsmasse, die der Berührfläche gegenüberliegt, konkav, insbesondere kegelförmig vertieft, ausgebildet ist. Hierdurch wird gewährleistet, dass der Kontaktbereich in einem radial außenliegenden Bereich der Hilfsmasse angesiedelt ist. Besonders bevorzugt ist vorgesehen, dass der Kontaktbereich angrenzend an eine Stirnfläche der Hilfsmasse, die auch als Umfangsfläche bezeichnet werden kann, angeordnet ist. Hierdurch wird eine kippstabile Auflage der Hilfsmasse auf der Berührfläche gewährleistet.

Bei einer Weiterbildung der Erfindung ist vorgesehen, dass das Zugstück mit einem ersten Endbereich mit dem Trägerkörper gekoppelt ist und mit einem zweiten Endbereich mit der Hilfsmasse gekoppelt ist und einen zwischen dem ersten Endbereich und dem zweiten Endbereich ausgebildeten Biegeabschnitt aufweist, der als Festkörperlager für eine Kopplung zwischen Trägerkörper und Hilfsmasse ausgebildet ist. Bei dieser Ausführungsform des Zugstücks ist vorgesehen, dass das Zugstück bei einer Relativbewegung der Hilfsmasse gegenüber dem Trägerkörper elastisch deformiert wird. Hierzu weist das Zugstück einen Biegeabschnitt auf, der zwischen einem ersten Endbereich des Zugstücks und einem zweiten Endbereich des Zugstücks erstreckt ist. Beispielhaft kann das Zugstück als schlanker Rundstab ausgebildet sein, dessen Durchmesser maximal 1/10 eine Längenerstreckung beträgt, wobei mit einem derartigen Zugstück Relativbewegungen der Hilfsmasse gegenüber dem Trägerkörper in zwei senkrecht zueinander ausgerichteten Raumrichtungen ermöglicht werden. Alternativ kann der Biegebereich des Zugstücks als Blattfeder ausgebildet sein, sofern eine Dämpfungswirkung vorzugsweise oder ausschließlich in einer Raumrichtung bewirkt werden soll. Bei einer weiteren alternativen Ausgestaltung des Biegebereichs kann dieser als Wendelfeder ausgebildet sein, die in gleicher Weise wie der Rundstab für Relativbewegungen der Hilfsmasse in zwei Raumrichtungen gegenüber dem Trägerkörper genutzt werden kann. Bei dieser Ausgestaltung des Zugstücks wird zusätzlich zur Reibkraftübertragung zwischen Hilfsmasse und Berührfläche und zur elastischen Deformation der Berührfläche auch ein gewisser Dämpfungsbeitrag durch die elastische Deformation des Zugstücks geleistet. Grundsätzlich ist davon auszugehen, dass die Berührfläche eben ausgebildet ist und die Hilfsmasse parallel zur Berührfläche bewegt wird.

In weiterer Ausgestaltung der Erfindung ist vorgesehen, dass das Zugstück mit einem ersten Endbereich am Trägerkörper festgelegt ist und dass zwischen einem zweiten Endbereich des Zugstücks und der Hilfsmasse eine Koppelanordnung aus der Gruppe: Gleitlager, Wälzlager, Federelement, angeordnet ist. Hierbei besteht die Aufgabe des Zugstücks vorwiegend, insbesondere ausschließlich, in der Normalkraftübertragung vom Trägerkörper auf die Hilfsmasse. Eine eventuell bei der Relativbewegung der Hilfsmasse gegenüber dem Trägerkörper auftretende elastische Deformation des Zugstücks trägt allenfalls in geringer Weise zur Dämpfungswirkung bei. Sofern die Koppelanordnung zwischen dem zweiten Endbereich des Zugstücks und der Hilfsmasse als Gleitlager oder Wälzlager ausgebildet ist, wird die gewünschte Dämpfungswirkung zumindest nahezu ausschließlich durch die Reibkraftübertragung zwischen Hilfsmasse und Berührfläche und durch die damit einhergehende elastische Deformation der Berührfläche hervorgerufen, die in innerer Reibung in der Hilfsmasse und/oder in der Berührfläche resultiert. Durch diese Reibkraftübertrag und die innere Reibung findet eine Wandlung von Bewegungsenergie in Wärmeenergie statt, die in die Umgebung des Werkstücktischs abgegeben werden kann.

Be einer Ausgestaltung des zweiten Endbereichs des Zugstücks als Gleitlager oder Wälzlager wird davon ausgegangen, dass sowohl die Gleitlagerung als auch die Wälzlagerung für eine reibungsarme Übertragung der Normalkraft vom Zugstück auf die Hilfsmasse optimiert sind. Anders verhält es sich, wenn das Koppelelement als Federelement ausgebildet ist, bei dem die Normalkraftübertragung mit einer elastischen Deformation des Federelements bei einer Relativbewegung der Hilfsmasse gegenüber dem Trägerkörper einhergeht und damit auch ein gewisser Anteil der Dämpfung durch das Federelement aufgebracht wird. Dies gilt insbesondere für den Fall, dass das Federelement als Körper aus einem gummielastischen Material, beispielsweise aus Naturkautschuk, Nitril-Butadien-Kautschuk, Ethylen-Propylen-Dien-Kautschuke, Fluorkautschuk oder Silikon hergestellt ist, das eine hohe Eigendämpfung aufweist.

Vorteilhaft ist es, wenn dem Trägerkörper ein Aktor zugeordnet ist, der für eine Normalkrafteinleitung auf das Zugstück ausgebildet ist. Mit einem Aktor, bei dem es sich beispielsweise um einen elektrischen oder pneumatischen oder hydraulischen Linearantrieb handeln kann, ist eine gesteuerte oder geregelte Einstellung der Normalkraft, die vom Trägerkörper über das Zugstück auf die Hilfsmasse übertragen wird, möglich. Vorzugsweise ist der Aktor im Trägerkörper integriert oder an den Trägerkörper angebaut und steht über eine, vorzugsweise flexibel ausgebildete, Versorgungsleitung mit einer Steuerungseinrichtung in Verbindung, die für eine Bereitstellung von elektrischer oder pneumatischer oder hydraulischer Energie an den Aktor ausgebildet ist.

Zweckmäßig ist es, wenn im Trägerkörper eine Zylinderbohrung ausgebildet ist und wenn das Zugstück an einem der Hilfsmasse abgewandten Endbereich mit einem Arbeitskolben verbunden ist, der linearbeweglich abdichtend in der Zylinderbohrung aufgenommen ist und der mit der Zylinderbohrung wenigsten einen größenvariablen Fluidarbeitsraum begrenzt und mit der Zylinderbohrung einen Fluidaktor bildet. Dieser Fluidaktor kann als hydraulischer oder pneumatischer Aktor ausgebildet sein und ermöglicht durch seine Integration in den Trägerkörper eine sehr kompakte Bauweise für den Werkstücktisch. Hierzu ist im Werkstücktisch eine Zylinderbohrung ausgebildet, die eine Mittelachse aufweist, die vorzugsweise quer zur Berührfläche ausgerichtet ist. Die Zylinderbohrung erstreckt sich längs der Mittelachse mit einer gleichbleibenden, beispielsweise kreisförmigen, Profilierung und dient zur Aufnahme eines Arbeitskolbens. Der Arbeitskolben weist eine Profilierung auf, die geometrisch ähnlich zu Profilierung der Zylinderbohrung ist. Vorzugsweise ist vorgesehen, dass zwischen dem Arbeitskolben und der Zylinderbohrung ein umlaufender Dichtspalt ausgebildet ist, der von einer Ringdichtung, die am Arbeitskolben festgelegt ist, überbrückt wird. Der Arbeitskolben bildet mit der Zylinderbohrung einen größenvariablen, abgedichteten Arbeitsraum oder zwei größenvariable, abgedichtete Arbeitsräume auf, wobei jeder der Arbeitsräume mit einem druckbeaufschlagtem Arbeitsfluid, beispielsweise Hydrauliköl oder Druckluft, versorgt werden kann, um eine lineare Bewegung des Arbeitskolbens längs der Mittelachse zu bewirken. Vorzugsweise ist ein Arbeitsraum vorgesehen, der zwischen dem Arbeitskolben und der Berührfläche erstreckt ist, sodass eine Versorgung dieses Arbeitsraums mit einem druckbeaufschlagtem Arbeitsfluid eine Zugkrafteinleitung auf das mit dem Arbeitskolben gekoppelte Zugstück bewirkt.

Bevorzugt ist vorgesehen, dass am Grundträger und/oder am Werkstückträger und/oder an der Hilfsmasse wenigstens ein Beschleunigungssensor und/oder ein Geschwindigkeitssensor angeordnet ist, der zur Bereitstellung eines beschleunigungsabhängigen oder geschwindigkeitsabhängigen elektrischen Sensorsignals ausgebildet ist und/oder dass am Grundträger und/oder am Werkstückträger wenigstens ein Lagesensor angeordnet ist, der zur Bereitstellung eines elektrischen Sensorsignals in Abhängigkeit von einer räumlichen Ausrichtung des Grundträgers ausgebildet ist. Vorzugsweise ist vorgesehen, dass anhand des elektrischen Sensorsignals eine Anpassung der Normalkraft, die vom Aktor über das Zugstück auf die Hilfsmasse eingeleitet wird, erfolgen kann. Diese Anpassung kann in Abhängigkeit von einer Relativbewegung der Hilfsmasse gegenüber dem Trägerkörper und/oder in Abhängigkeit von einer räumlichen Ausrichtung des Werkstücktischs vorgenommen werden. Hierzu kann vorgesehen sein, dass der wenigstens eine Sensor elektrisch mit einer Steuereinrichtung verbunden ist, die ihrerseits für eine Ansteuerung des Aktors in Abhängigkeit von dem wenigstens einen Sensorsignal ausgebildet ist. Die Steuereinrichtung ist beispielsweise zur Durchführung eines Computerprogramms ausgebildet, das in einem Speicherbereich der Steuereinrichtung gespeichert ist. Dieses Computerprogramm kann darauf ausgerichtet sein, die vom Aktor bereitgestellte Normalkraft so zu steuern oder zu regeln, dass ein Schwingungsverhalten des Werkstücktischs minimal ist. Hierzu kann insbesondere vorgesehen sein, vor der Durchführung eines Bearbeitungsvorgangs für ein am Werkstücktisch aufgenommenes Werkstück eine Parametrierung der Steuervorrichtung vorzunehmen, bei der beispielsweise Informationen wie das Gewicht des Werkstücks und/oder die räumliche Ausdehnung des Werkstücks und/oder eine Bearbeitungsposition, an der eine Werkstückbearbeitung vorgenommen wird, zur Verfügung gestellt werden, um eine Anpassung der Normalkraft an die tatsächlichen Verhältnisse zu ermöglichen.

Bei einer vorteilhaften Weiterbildung der Erfindung ist vorgesehen, dass der Kontaktbereich einen maximalen Abstand zu einem Massenmittelpunkt der Hilfsmasse aufweist, der einem Abstand der Stirnfläche der Hilfsmasse zum Massenmittelpunkt entspricht und/oder dass die Hilfsmasse gegenüber dem Trägerkörper zwei lineare Freiheitsgrade der Bewegung aufweist, die eine Ebene aufspannen, die parallel zur Berührfläche ausgerichtet ist. Der Massenmittelpunkt der Hilfsmasse ist das mit der Masse gewichtete Mittel der Positionen seiner Massenpunkte. Bei einem homogenen Körper, der keine lokalen Dichteunterschiede aufweist, stimmt der Massenmittelpunkt mit dem geometrischen Schwerpunkt überein. Bei einem inhomogenen Körper, der lokalen Dichteunterschiede aufweist, kann eine Position des Massenmittelpunkts von einer Position des geometrischen Schwerpunkts abweichen. Vorzugsweise ist vorgesehen, dass die Hilfsmasse und die Berührfläche derart aufeinander abgestimmt sind, dass ein maximaler Abstand des Kontaktbereichs zum Massenmittelpunkt der Hilfsmasse einem Abstand der Stirnfläche, die auch als Umfangsfläche der Hilfsmasse bezeichnet werden kann, zum Massenmittelpunkt entspricht. Dieser maximale Abstand beschreibt somit eine Außengrenze des Kontaktbereichs, eine Innengrenze des Kontaktbereichs liegt näher am Massenmittelpunkt und wird in Abhängigkeit von der bereitgestellten Normalkraft verändert. Hierbei wird davon ausgegangen, dass die Innengrenze des Kontaktbereich bei zunehmender Normalkraft näher an den Massenmittelpunkt heranrückt, da die elastische Deformation der Berührfläche, insbesondere der Dämpfungsplatte, zunimmt und dadurch eine Vergrößerung des Kontaktbereichs stattfindet. Ergänzend oder alternativ ist vorgesehen, dass die Hilfsmasse gegenüber dem Trägerkörper zwei lineare Freiheitsgrade der Bewegung aufweist, die eine Ebene aufspannen, die parallel zur Berührfläche ausgerichtet ist. Hierdurch wird beschrieben, dass die Hilfsmasse in zwei zueinander senkrechten Raumrichtungen beweglich am Trägerkörper gelagert ist. Zusätzlich kann vorgesehen sein, dass die Hilfsmasse einen rotatorischen Freiheitsgrad der Bewegung aufweist, der in einer Raumrichtung parallel zur Normalkraft ausgerichtet ist. Ein dritter Freiheitsgrad der Bewegung parallel zur Normalkraft sowie ein zweiter und ein dritter rotatorischen Freiheitsgrad der Bewegung werden durch die Auflage der Hilfsmasse auf der Berührfläche und die Wirkung der Normalkraft auf einen Betrag von weniger als 5 Prozent, vorzugsweise von weniger als 2 Prozent, der jeweils anderen Freiheitsgrade beschränkt. Zur Begrenzung der Relativbewegung der Hilfsmasse gegenüber dem Trägerkörper ist wenigstens ein Bewegungsanschlag vorgesehen, der gegenüberliegend zur Stirnfläche der Hilfsmasse am Trägerkörper angeordnet sein kann und der derart positioniert ist, dass die Hilfsmasse bei einer maximalen Auslenkung gegenüber dem Trägerkörper in Anlage zum Bewegungsanschlag kommt, bevor ein unerwünschter mechanischer Kontakt mit den Trägerkörper eintritt.

In weiterer Ausgestaltung der Erfindung ist vorgesehen, dass die Werkstückaufnahme mehrere Spanneinheiten aufweist, die in einer Normalenrichtung von der Oberseite des Trägerkörpers abragen und dass die Hilfsmasse und die Dämpfungsplatte zwischen den Spanneinheiten erstreckt sind und/oder dass am Trägerkörper benachbart zur Hilfsmasse wenigstens ein Bewegungsanschlag aus einem gummielastischen Material angeordnet ist, um eine Bewegungsamplitude der Hilfsmasse zu begrenzen. Die Spanneinheiten, die auch als Nullpunktspannsysteme bezeichnet werden können, ermöglichen beispielsweise eine reproduzierbare Platzierung von Werkstückpaletten und darauf aufgespannten Werkstücken. Beispielhaft sind die Spanneinheiten jeweils tellerförmig ausgebildet und weisen eine zentrale Bohrung auf, in die ein Spannbolzen eingesetzt werden kann, der an einer Werkstückpalette festgelegt ist. Dieser Spannbolzen wird von der Spanneinheit mit einem Kugelspannsystem zentrisch fixiert und gewährleistet damit eine präzise Positionierung der Werkstückpalette gegenüber dem Werkstücktisch. Die Spanneinheiten sind in einer vorgegebenen Anordnung auf der Oberseite des Trägerkörpers angebracht, die Hilfsmasse erstreckt sich in den Zwischenräumen zwischen den Spanneinheiten, um eine möglichst kompakte Gestaltung des Werkstückträgers zu ermöglichen. Vorzugsweise ist die Hilfsmasse sternförmig mit einem Zentralbereich und von dort ausgehenden Auslegern ausgebildet. Besonders bevorzugt ist die Hilfsmasse drehsymmetrisch ausgebildet. Vorzugsweise entspricht die größtmögliche Kennzahl der Rotationssymmetrien der Anzahl der Spanneinheiten. Umfasst der Werkstückträger rein exemplarisch vier Spanneinheiten, so weist die Hilfsmasse vorzugsweise vier Rotationssymmetrien auf, kann also durch vier Rotationsbewegungen, die jeweils einen Rotationswinkel von 90 Grad überstreichen, jeweils auf sich selbst abgebildet werden und kann auch als kreuzförmig bezeichnet werden.

Bei einer Weiterbildung der Erfindung ist vorgesehen, dass die Trägeraufnahme und den Kupplungsabschnitt für eine schwenkbewegliche Kopplung zwischen dem Grundträger und dem Werkstückträger ausgebildet sind. Hierdurch wird ein zusätzlicher, rotatorischer Freiheitsgrad der Bewegung zur Verfügung gestellt, mit dem zusätzliche Bearbeitungsmöglichkeiten für das am Werkstückträger aufgenommene Werkstück geschaffen werden. Vorzugsweise ist im Grundträger eine Antriebseinrichtung integriert, die zur Einleitung einer Schwenkbewegung auf den Werkstückträger ausgebildet ist, wobei diese Antriebseinrichtung mit einer Maschinensteuerung der Werkzeugmaschine verbunden ist und von dort mit geeigneten Ansteuersignalen, insbesondere in Form von elektrischer oder pneumatischer oder hydraulischer Energie, versorgt wird.

Die Aufgabe der Erfindung wird für ein Verfahren zur Schwingungsdämpfung für einen Werkstücktisch, der beweglich an einem Maschinenrahmen einer Werkzeugmaschine angeordnet ist, mit den folgenden Schritten gelöst: Erfassen wenigstens einer physikalischen Größe aus der Gruppe: Schwenkwinkel des Werkstücktischs gegenüber dem Maschinenrahmen, Schnittgeschwindigkeit eines Bearbeitungswerkzeugs, Materialeigenschaft eines Werkstücks, Werkstückgeometrie, Werkstückmasse, Vorschubgeschwindigkeit für ein Bearbeitungswerkzeug, Schnitttiefe für einen Eingriff eines Bearbeitungswerkzeugs in ein Werkstück, Schneidengeometrie eines Bearbeitungswerkzeugs, Abstand eines Eingriffs eines Bearbeitungswerkzeugs in ein Werkstück vom Werkstücktisch, Schwingungsbewegung eines Bearbeitungswerkzeugs, Schwingungsbewegung eines Werkstücks, Schwingungsbewegung des Werkstücktischs, Schwingungsbewegung einer beweglich am Werkstücktisch gelagerten Hilfsmasse, Schwingungsbewegung des Maschinenrahmens, Schwingungsbewegung eines Achsschlittens, sowie Berechnen einer Schwingungsfrequenz und/oder einer Schwingungsamplitude für einen einer beweglich an einem Trägerkörper des Werkstücktischs gelagerten Hilfsmasse, um eine Dämpfungswirkung durch die Hilfsmasse zu maximieren, Berechnen einer Normalkraft, die von der Hilfsmasse auf eine am Trägerkörper angebrachte Dämpfungsplatte übertragen werden muss, um die berechnete Schwingungsfrequenz und/oder Schwingungsamplitude für die Hilfsmasse einzustellen, Ausgeben der berechneten Normalkraft an eine Anzeigeeinrichtung und/oder an eine Steuereinrichtung der Werkzeugmaschine.

Die Zielsetzung des Verfahrens besteht somit in der Ermittlung derjenigen Dämpfung, mit der das Bearbeitungsverfahren für das Werkstück mit einem optimierten Schwingungsverhalten des Werkstücktischs durchgeführt werden kann. Ein typisches Kriterium für eine Optimierung des Schwingungsverhaltens des Werkstücktischs ist eine Minimierung der Schwingungen, die während des Bearbeitungsverfahrens auftreten. Diese Schwingungen hängen von einer Vielzahl von physikalischen Größen ab, von denen eine oder mehrere für die Optimierung des Schwingungsverhaltens herangezogen werden können. Manche der physikalischen Größen stehen vor der Durchführung des Bearbeitungsvorgangs fest, beispielsweise die Schneidengeometrie eines Bearbeitungswerkszeugs wie beispielsweise eines Fräsers. Andere physikalischen Größen verändern sich während der Durchführung des Bearbeitungsvorgangs, beispielsweise die Werkstückgeometrie oder mit welchem Abstand ein Eingriff des Bearbeitungswerkzeug in das Werkstück bezogen auf den Werkstücktisch erfolgt. Manche der veränderlichen physikalischen Größen können vor dem Bearbeitungsvorgang durch eine Simulation ermittelt werden, andere können während der Durchführung des Bearbeitungsvorgangs mit Sensoren ermittelt werden.

Unter Berücksichtigung der wenigstens einen physikalischen Größe sowie weiterer Parameter wie beispielsweise einem Massenverhältnis zwischen Hilfsmasse und den Komponenten: Grundträger, Trägerkörper, Werkstück und der Reibpaarung zwischen der Hilfsmasse und der Berührfläche erfolgt eine Berechnung einer Schwingungsfrequenz und/oder einer Schwingungsamplitude für die Hilfsmasse, mit der ein vorteilhaftes Schwingungsverhalten, insbesondere eine vorteilhafte Schwingungsdämpfung, für den Werkstücktisch erzielt werden kann. Diese Schwingungsfrequenz und/oder Schwingungsamplitude wird vorzugsweise so gewählt, dass der Werkstücktisch entweder für den gesamten Bearbeitungsvorgang oder für die jeweilige Bearbeitungsphase ein minimales Schwingungsverhalten aufweist. Auf Basis der ermittelten Schwingungsfrequenz und/oder Schwingungsamplitude erfolgt eine Ermittlung einer Normalkraft, die von Trägerkörper mit Hilfe des Zugstücks auf die Hilfsmasse übertragen werden muss, um das gewünschte Dämpfungsverhalten zu realisieren. In einem nachfolgenden Schritt kann wahlweise vorgesehen sein, die ermittelte Normalkraft auf eine Anzeigeeinrichtung wie beispielsweise einem Bildschirm anzuzeigen oder an eine Steuereinrichtung der Werkzeugmaschine zur Verfügung zu stellen.

Sofern keine automatisierte Einstellung der Normalkraft vorgesehen ist, kann in einem weiteren Verfahrensschritt eine manuelle Krafteinstellung an einem Zugstück vorgenommen werden, das die Hilfsmasse mit dem Trägerkörper verbindet.

Beispielsweise kann das Zugstück mit seinem ersten Endbereich im Trägerkörper eingeschraubt sein, wobei in diesem Fall eine Einstellung der Normalkraft über eine Vorgabe eines Drehmoments, mit dem das Zugstück beaufschlagt werden muss, erfolgt. Hierzu erfolgt nach der Berechnung der Normalkraft und einer Umrechnung der Normalkraft in ein Drehmoment eine Betätigung des Zugstücks mit dem ermittelten Drehmoment, beispielsweise durch einen Bediener unter Verwendung eines Drehmomentschlüssels.

Sofern eine automatisierte Einstellung der Normalkraft vorgesehen ist, erfolgt eine Bereitstellung von pneumatischer oder hydraulischer oder elektrischer Energie an einen am Trägerkörper angeordneten Aktor, um eine Einleitung der Normalkraft auf ein Zugstück zu bewirken, das, insbesondere über ein federelastisches Koppelelement, mit der Hilfsmasse gekoppelt ist. Vorzugsweise ist der Aktor als Linearaktor ausgeführt, der eine Zugkraft auf das Zugstück ausübt, um damit die gewünschte Normalkraft auf die Hilfsmasse einzuleiten. Alternativ ist der Aktor als rotatorischer Antrieb ausgebildet, der über eine geeignete Getriebeeinrichtung die gewünschte Zugkraft auf das Zugstück ausübt.

In weiterer Ausgestaltung des Verfahrens ist vorgesehen, dass die Erfassung wenigstens einer physikalischen Größe durch einen Sensor erfolgt, der elektrisch mit einer Steuereinrichtung verbunden ist und dass in der Steuereinrichtung in Abhängigkeit von einem Sensorsignal des Sensors die Berechnung der Schwingungsfrequenz und/oder der Schwingungsamplitude für die Hilfsmasse und die daraus resultierende Normalkraft vorgenommen wird. Bei dem Sensor kann es sich beispielsweise um einen Beschleunigungssensor oder einen Geschwindigkeitssensor oder einen Lagesensor handeln, dessen Sensorsignale in einer Steuereinrichtung der Werkzeugmaschine oder in einer unabhängig agierenden Dämpfungssteuerung verarbeitet werden, um hieraus jeweils die Normalkraft zu berechnen, mit der das gewünschte Dämpfungsverhalten für den Werkstücktisch erzielt werden kann. Hierbei wird davon ausgegangen, dass die Steuereinrichtung der Werkzeugmaschine oder die Dämpfungssteuerung mit einem Aktor im oder am Werkstücktisch gekoppelt ist, mit dessen Hilfe die jeweilige Normalkrafteinstellung vorgenommen werden kann.

In weiterer Ausgestaltung des Verfahrens ist vorgesehen, dass die Erfassung wenigstens einer physikalischen Größe aus einem Maschinenprogramm der Werkzeugmaschine erfolgt, in dem Parameter für einen Bearbeitungsvorgang für ein Werkstück enthalten sind. Diese Vorgehensweise kann ergänzend oder alternativ zur Verarbeitung von Sensorsignalen vorgenommen werden und zielt darauf ab, das Dämpfungsverhalten für den Werkstücktisch auf den jeweils vorgesehenen Bearbeitungsschritt abzustimmen. Beispielsweise können dem Maschinenprogramm physikalische Größen wie der Schwenkwinkel des Werkstücktischs gegenüber dem Maschinenrahmen, die Schnittgeschwindigkeit des Bearbeitungswerkzeugs, die Materialeigenschaften des Werkstücks, die Vorschubgeschwindigkeit für das Bearbeitungswerkzeug, die Schnitttiefe für den Eingriff des Bearbeitungswerkzeugs in das Werkstück, die Schneidengeometrie des Bearbeitungswerkzeugs, der Abstand zwischen dem Werkstücktisch und dem Eingriff des Bearbeitungswerkzeugs in das Werkstück, entnommen und für die Ermittlung des Dämpfungsverhaltens herangezogen werden. Eine Ermittlung dieser physikalischen Größen kann zwar durch entsprechende Sensoren vorgenommen werden, die Auswertung des Maschinenprogramms im Hinblick auf diese physikalischen Größen ermöglicht den Verzicht auf Sensoren zur Ermittlung dieser physikalischen Größen.

In weiterer Ausgestaltung des Verfahrens ist vorgesehen, dass die Erfassung wenigstens einer physikalischen Größe aus dem Maschinenprogramm für den Bearbeitungsschritt für das Werkstück vorauseilend unter Berücksichtigung einer Verarbeitungsdauer der Steuereinrichtung und eines Bewegungsverhaltens des Aktors vorgenommen wird. Diese Vorgehensweise ist darauf gerichtet, dass das Dämpfungsverhalten für den Werkstücktisch im Hinblick auf den jeweiligen Bearbeitungsschritt in Echtzeit eingestellt wird. Hierzu führt die Steuerungseinrichtung der Werkzeugmaschine eine Betrachtung von Bearbeitungsschritten für das Werkstück durch, die in der Zukunft liegen. Eine Zeitspanne zwischen dem jeweils aktuell durchgeführten Bearbeitungsschritt und dem von der Steuerungseinrichtung betrachteten zukünftigen Bearbeitungsschritt wird derart gewählt, dass diese Zeitspanne einer Summe der Verarbeitungsdauer der Steuerungseinrichtung und des Bewegungsverhaltens des Aktors, mit dessen Hilfe die Normalkrafteinstellung vorgenommen wird, entspricht. Hierdurch wird gewährleistet, dass die Normalkraft zu Beginn des jeweiligen Bearbeitungsschritts bereits eingestellt ist oder innerhalb eines sehr kurzen zeitlichen Toleranzintervalls eingestellt wird, so dass mit Beginn des jeweiligen Bearbeitungsschritts auch das jeweils gewünschte Dämpfungsverhalten für den Werkstücktisch vorliegt.

Nachfolgend wird die Erfindung anhand der beiliegenden Zeichnung näher erläutert und in dieser zeigen
- Figur 1: eine streng schematische, perspektivische Darstellung eines Werkstücktischs mit einem Grundträger und einem Werkstückträger,
- Figur 2: eine streng schematische Draufsicht auf den Werkstückträger gemäß der Figur 1, und
- Figur 3: eine streng schematische Schnittdarstellung eines Teilbereichs des Grundträgers sowie des daran aufgenommenen Werkstückträgers.

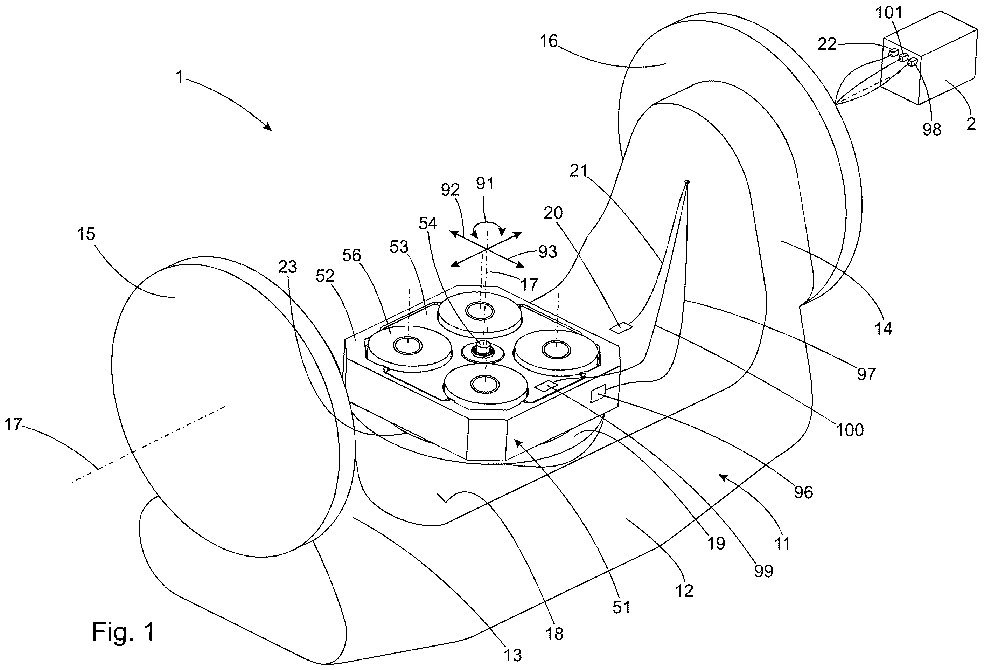

Ein in der Figur 1 gezeigte Werkstücktisch 1 ist zur Verwendung an einer nicht dargestellten Werkzeugmaschine vorgesehen und umfasst einen U-förmig profilierten Grundträger 11 sowie einen am Grundträger 11 aufgenommenen Werkstückträger 51.

Der Grundträger 11 kann beispielsweise als Schweißkonstruktion aus mehreren, nicht näher dargestellten Blechplatten oder einstückig als Schmiedeteil ausgebildet sein und umfasst einen Tragbalken 12, an dem jeweils endseitig ein Tragschenkel 13, 14 angebracht ist. Jede der Tragschenkel 13, 14 ist mit einer nur symbolisch als kreisrunde Platte gezeigten Maschinenschnittstelle 15, 16 versehen, die für eine schwenkbewegliche Lagerung des Grundträgers 11 in einem nicht dargestellten Maschinenbett einer Werkzeugmaschine vorgesehen sind. Die Maschinenschnittstellen 15, 16 definieren durch ihre Anordnung und Gestaltung eine Schwenkachse 17, um die der Grundträger 11 bei Anordnung in der nicht dargestellten Werkzeugmaschine verschwenkt werden kann.

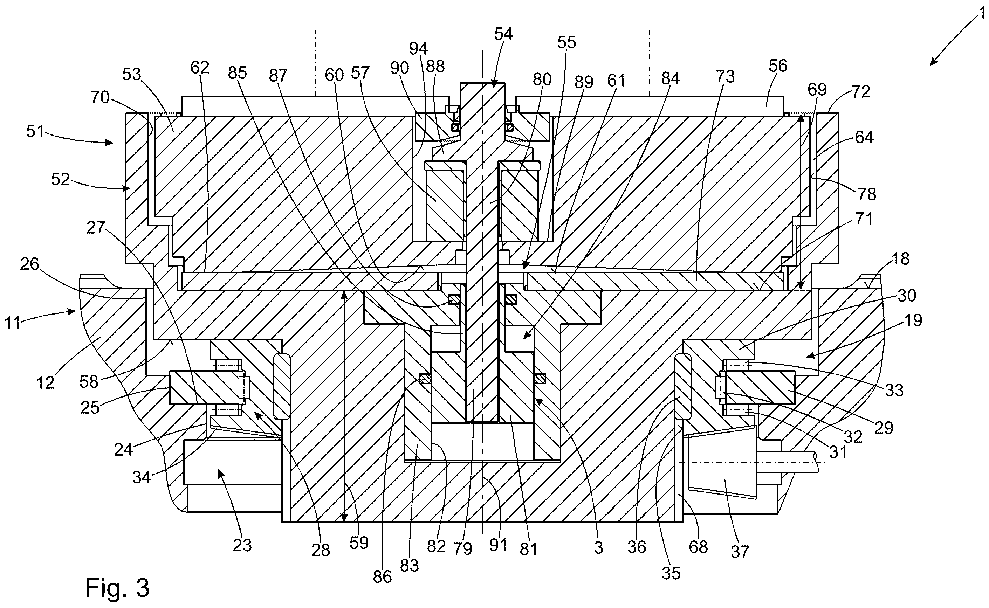

An einer Oberseite 18 des Tragbalkens 12 ist eine in der Figur 3 näher dargestellte Trägeraufnahme 19 ausgebildet, die für eine drehbewegliche Lagerung eines Werkstückträgers 51 gegenüber dem Grundträger 11 vorgesehen ist.

Benachbart zur Trägeraufnahme 19 ist am Tragbalken 12 ein Beschleunigungssensor 20 angebracht, der für eine Erfassung von linearen Beschleunigungen und Drehbeschleunigungen in allen Raumrichtungen ausgebildet ist. Ausgehend vom Beschleunigungssensor 20 erstreckt sich eine Sensorleitung 21, die durch den rechten Tragschenkel 14 geführt ist und die in nicht dargestellter Weise mit einer nur symbolisch dargestellten Maschinensteuerung 2 der nicht näher dargestellten Werkzeugmaschine, in die der Werkstücktisch 1 eingebaut werden kann, verbunden ist. Hierzu erstreckt sich die Sensorleitung 21 über die rechte Maschinenschnittstelle 16 hinaus und ist endseitig mit einer Steckverbinder 22 versehen, der in die Maschinensteuerung 2 eingesteckt ist.

Der Werkstückträger 51 umfasst einen Trägerkörper 52, an dem rein exemplarisch vier kreiszylindrisch ausgebildete Werkstückaufnahmen 56 angeordnet sind, bei denen es sich beispielsweise um Nullpunktspannsysteme handelt. Ferner umfasst der Werkstückträger 51 eine kreuzförmig ausgebildete Hilfsmasse 53, der sich zwischen den Werkstückaufnahmen 56 erstreckt. Die Hilfsmasse 53 steht über ein Zugstück 54 und ein Federelement 57 in kraftübertragener Verbindung mit dem Trägerkörper 52, wie dies insbesondere aus der Schnittdarstellung der Figur 3 zu entnehmen ist.

Der Trägerkörper 52 ist um eine Schwenkachse 91 drehbeweglich am Grundträger 11 gelagert, sodass ein nicht dargestelltes Werkstück, das am Werkstückträger 51 festgelegt werden kann, sowohl um die Schwenkachse 91 als auch um die Schwenkachse 17 verschwenkt werden kann, womit in Verbindung mit einem nicht gezeigten Bearbeitungskopf der Werkzeugmaschine, der seinerseits rein exemplarisch in drei zueinander senkrechten Raumrichtungen linear verfahren werden kann, nahezu jede Oberfläche am nicht dargestellten Werkstück bearbeitet werden kann.

Die Hilfsmasse 53 wird durch das Zugstück 54 derart mit dem Trägerkörper 52 gekoppelt, dass lineare Relativbewegungen der Hilfsmasse 53 gegenüber dem Trägerkörper 52 längs zweier senkrecht zueinander ausgerichteter Bewegungswege 92, 93 sowie eine Rotationsbewegung um die Schwenkachse 91 möglich sind. Hiermit kann die Hilfsmasse 53 zur Dämpfung von Schwingungsbewegungen in einer quer zur Schwenkachse 91 ausgerichteten, durch die linearen Bewegungswege 92 und 93 aufgespannten Schwingungsebene verwendet werden.

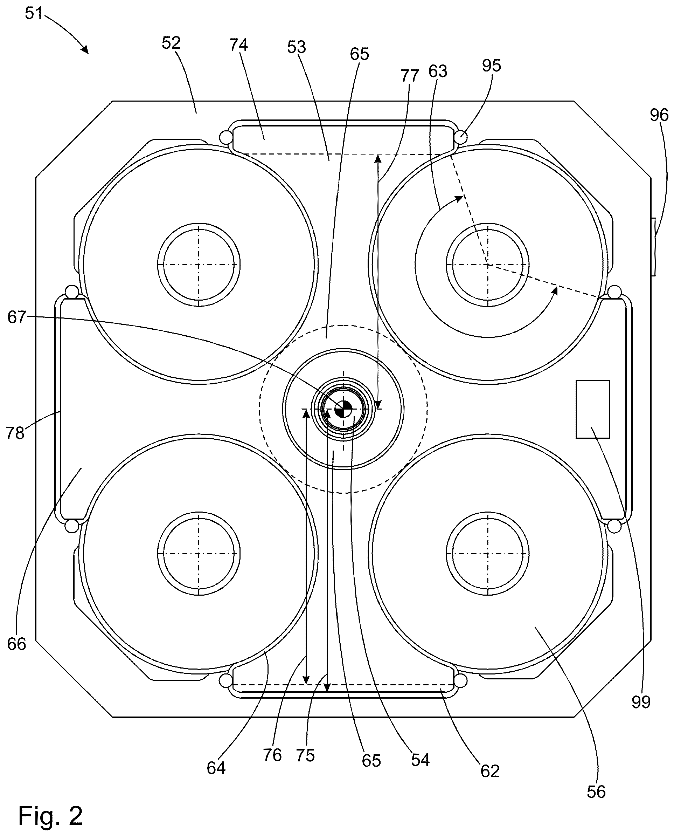

Aus der Darstellung der Figur 2 ist zu entnehmen, dass die Hilfsmasse 53 die kreiszylindrischen Werkstückaufnahmen 56 jeweils in einem Winkel 63 von ungefähr 230 Grad umgibt. Hierbei begrenzt die Hilfsmasse 53 mit jeder der Werkstückaufnahmen 56 einen als Kreisringabschnitt ausgebildeten Bewegungsspalt 64. Dabei sind die Bewegungsspalte 64 derart bemessen, dass die Hilfsmasse 53 längs der linearen Bewegungswege 92, 93 um einen Betrag aus der Neutralstellung gemäß der Figur 2 ausgelenkt werden kann, der weniger als 2 Prozent einer Erstreckung der Hilfsmasse längs einer der beiden Bewegungswege 92, 93 beträgt.

Die Hilfsmasse 53 kann durch einen kreisrund ausgebildeten Zentralbereich 65 und vier jeweils in 90-Grad-Teilung zueinander angeordnete, T-förmig profilierte Ausleger 66 beschrieben werden. Um eine möglichst richtungsunabhängige Dämpfungswirkung in der durch die linearen Bewegungswege 92 und 93 aufgespannten Schwingungsebene gewährleisten zu können, ist ein Massenmittelpunkt 67 der Hilfsmasse 53 exakt im Flächenmittelpunkt der Hilfsmasse 53 angeordnet. Um diese Übereinstimmung des Massenmittelpunkt 67 mit dem Flächenmittelpunkt gewährleisten zu können, weist die Hilfsmasse 53 über sein gesamtes Volumen die gleiche Dichte (homogener Körper) auf und ist bezogen auf die Schwenkachse 91 als vierfach punktsymmetrischer Körper ausgebildet.

Wie der Darstellung der Figur 3 entnommen werden kann, weist der Tragbalken 12 eine Trägeraufnahme 19 auf, an der ein Kupplungsabschnitt 59 des Trägerkörpers 52 aufgenommen werden kann. Beispielhaft umfasst die Trägeraufnahme 19 eine Ausnehmung 23, die den Tragbalken 12 längs der Schwenkachse 91 durchsetzt und die als Stufenbohrung mit mehreren, jeweils kreiszylindrischen und koaxial zueinander ausgerichteten Bohrungsabschnitten 24, 25 und 26 ausgebildet ist. Hierbei weist ein unterer Bohrungsabschnitt 24 einen geringeren Durchmesser als ein mittlerer Bohrungsabschnitt 25 auf. Ein oberer Bohrungsabschnitt 26 weist einen größeren Durchmesser als der mittlere Bohrungsabschnitt 25 auf.

Auf einer kreisringförmig ausgebildeten Stirnfläche 27, die sich zwischen dem unteren Bohrungsabschnitt 24 und dem mittleren Bohrungsabschnitt 25 erstreckt, liegt ein kreisringförmig ausgebildeter Außenring 29 eines Drehlagers 28 auf, das für eine drehbewegliche Lagerung des Werkstückträgers 51 am Grundträger 11 vorgesehen ist. Der Außenring 29 wird von einem U-förmig profilierten Innenring 30 umgriffen, wobei zwischen dem Außenring 29 und dem Innenring 30 mehrere untere Axialwälzkörper 31, mehrere obere Axialwälzkörper 32 sowie mehrere Radialwälzkörper 33 angeordnet sind. Beispielhaft sind die Wälzkörper 31, 32 und 33 jeweils als kreiszylindrische Nadeln ausgebildet und ermöglichen damit eine reibungsarme Wälzlagerung des Innenrings 30 am Außenring 29 sowie eine Übertragung von Kräften vom Werkstückträger 51 auf den Grundträger 11.

Beispielhaft ist der Innenring 30 an einer dem Werkstückträger abgewandten Unterseite mit einer umlaufenden Verzahnung 34 versehen, in die ein Kegelrad 37 eingreift, das mit einem nicht dargestellten Antriebsmotor verbunden ist, um eine Rotationsbewegung des Innenrings 30 und des darin aufgenommenen Werkstückträgers 51 um die Schwenkachse 91 zu ermöglichen.

Um eine Drehmomentübertragung zwischen dem Innenring 30 und dem Werkstückträger 51 zu ermöglichen, sind an einer Innenoberfläche 35 des Innenrings 30 rein exemplarisch zwei Passfedern 36 angebracht, die in korrespondierende Längsnuten 68 im Kupplungsabschnitt 59 des Trägerkörpers 52 eingreifen. Für eine Übertragung von Druckkräften zwischen dem Werkstückträger 51 und dem Grundträger 11 ist vorgesehen, dass eine Kreisringfläche 58 des Trägerkörpers 52 auf dem Innenring 30 aufliegt.

Beispielhaft ist vorgesehen, dass der Kupplungsabschnitt 59 des Trägerkörpers 52 mit Ausnahme der Längsnuten 68 rotationssymmetrisch zur Schwenkachse 91 ausgebildet ist. Ein Trägerabschnitt 69, der oberhalb des Kupplungsabschnitts 59 angeordnet ist, weist in einer quer zur Schwenkachse 91 ausgerichteten, nicht eingezeichneten Querschnittsebene eine quadratische Profilierung auf.

Der Trägerabschnitt 69 ist mit einer Ausnehmung 70 versehen, die sich ausgehend von einer rein exemplarisch eben ausgebildeten, auch als Oberseite bezeichneten Auflagefläche 71 bis zu einer Oberkante 72 des Trägerabschnitts 69 erstreckt. In der Ausnehmung 70 sind die vier Werkstückaufnahmen 56 sowie die Hilfsmasse 53 aufgenommen. Ferner ist zwischen einer Unterseite 60 der Hilfsmasse 53 und der Auflagefläche 71 eine rein exemplarisch als Planparallelplatte ausgebildete Dämpfungsplatte 73 angeordnet, die beispielhaft die gleiche kreuzförmige Geometrie aufweist, wie sie in der Figur 2 für die Hilfsmasse 53 zu erkennen ist.

Die Dämpfungsplatte 73 ist aus einem Kunststoff-Vollmaterial hergestellt, kann aber alternativ auch mit regelmäßig oder unregelmäßig verteilten Hohlräumen versehen sein. Eine der Auflagefläche 71 abgewandte Oberseite der Dämpfungsplatte 73 bildet die Berührfläche 61, auf der die Unterseite 60 der Hilfsmasse 53 aufliegt.

Um eine vorteilhafte Kraftübertragung zwischen der Hilfsmasse 53 und der Berührfläche 61 der Dämpfungsplatte 73 gewährleisten zu können, ist die Berührfläche 61 als geschlossene und ebene Oberfläche ausgebildet. Ferner ist die Unterseite 60 rein exemplarisch als konkave Konusfläche ausgebildet. Hierdurch wird erreicht, dass die Hilfsmasse 53 bei einer horizontalen Ausrichtung der Oberseite 18 des Grundträgers 11 aufgrund seines Eigengewichts und ohne eine Zugkrafteinwirkung durch das Zugstück 54 einen keilförmig profilierten Arbeitsspalt 55 mit der Berührfläche 61 begrenzt, der sich mit zunehmendem Abstand von der Schwenkachse 91 verjüngt. Die Hilfsmasse 53 liegt mit einem schmalen, rein exemplarisch streifenförmigen, Kontaktbereich 62 auf der Dämpfungsplatte 73 auf, wie er rein schematisch in der Figur 2 eingezeichnet ist.

Mit zunehmender Zugkrafteinleitung durch das Zugstück 54 wird die parallel zur Schwenkachse 91 ausgerichtete Normalkraft, die von der Hilfsmasse 53 auf die Dämpfungsplatte 73 übertragen wird, erhöht. Hierdurch wird der Arbeitsspalt 55 verkleinert und es entsteht ein größerer Kontaktbereich 74, wie er rein exemplarisch in der Figur 2 eingezeichnet ist.

Aus den schematischen Darstellungen der Kontaktbereiche 62 und 74 gemäß der Figur 2 ist zu entnehmen, dass ein maximaler Abstand 75 zwischen dem Massenmittelpunkt 67 und den Kontaktbereichen 62 und 74 konstant ist und gleich einem Abstand von einer Stirnfläche 78 zum Massenmittelpunkt 67 ist. Ein minimaler Abstand 76 des Kontaktbereichs 62 zum Massenmittelpunkt 67 ist hingegen größer als ein minimaler Abstand 77 des Kontaktbereichs 74 zu Massenmittelpunkt 67.

Der vergrößerte Kontaktbereich 74 ermöglicht eine größere Reibkraftübertragung zwischen der Hilfsmasse 53 und der Dämpfungsplatte 73, die an der Auflagefläche 71 festgelegt ist, womit auch eine größere Dämpfungswirkung mit der Hilfsmasse 53 erzielt werden kann.

Zur Einstellung der Normalkraft, die vom Zugstück 54 auf die Hilfsmasse 53 übertragen wird, ist das Zugstück an einem ersten Endbereich 79 mit einem Arbeitskolben 81 gekoppelt, der in einer Zylinderbohrung 82 linearbeweglich abdichtend aufgenommen ist. Die Zylinderbohrung 82 ist rein exemplarisch in einer Zylinderhülse 83 ausgebildet, die in einer Ausnehmung 84 im Trägerkörper 52 festgelegt ist. Um einen druckdichten Arbeitsraum 84 zu schaffen, weist der Arbeitskolben 81 einen längs der Schwenkachse 91 erstreckten, kreishülsenförmigen Kolbenschaft 85 auf. Ein unterer Dichtring 86 liegt an einer Außenoberfläche des Arbeitskolbens 81 an. Ein oberer Dichtring 87 liegt an einer Außenoberfläche des Kolbenschafts 85 an. Bei einer Beaufschlagung des Arbeitsraums 84 mit einem druckbeaufschlagtem Fluid, beispielsweise Hydrauliköl oder Druckluft, wirkt eine gemäß der Darstellung der Figur 3 in vertikaler Richtung nach unten parallel zur Schwenkachse 91 ausgerichtete Druckkraft auf den Arbeitskolben 81, die zu einer Zugkraft im Zugstück 54 führt. Somit bildet der Arbeitskolben 81 mit der Zylinderbohrung 82 und den Dichtringen 86, 87 einen fluidisch betreibbaren Aktor 3 zur Bereitstellung einer Linearbewegung längs der Schwenkachse 91.

Das Zugstück 54 ist an einem zweiten Endbereich 80 mit einem Ringbund 88 versehen, der auf einem rein exemplarisch als Gummi-Metall-Baugruppe ausgebildeten Federelement 57 aufliegt, das seinerseits auf einer Axialfläche 89 der Hilfsmasse 53 aufliegt. Das Zugstück 54 kann somit über den Ringbund 88 eine Kraftübertragung auf das Federelement 57 und von dort auf die Hilfsmasse 53 vornehmen, sodass die Normalkrafteinleitung von der Hilfsmasse 53 auf die Dämpfungsplatte 73 von einem Arbeitsdruck im Arbeitsraum 84 abhängig ist und vorzugsweise wahlfrei eingestellt werden kann.

Oberhalb des Ringbunds 88 ist ein Verschlussring 90 auf das Zugstück 54 aufgesteckt, der die Ausnehmung 94 in der Hilfsmasse verschließt, in der das Zugstück 54 sowie das Federelement 57 aufgenommen sind.

Um eine Bewegungsbegrenzung für die linearen Bewegungen der Hilfsmasse 53 gewährleisten zu können, sind benachbart zu den Stirnflächen 78 der Hilfsmasse 53 am Trägerabschnitt 69 mehrere Anschlagkörper 95 als Bewegungsanschläge angeordnet. Rein exemplarisch sind die Anschlagkörper 95 jeweils als kreiszylindrische Stäbe aus Gummimaterial ausgebildet, die in korrespondierende Bohrung im Trägerabschnitt 69 eingesteckt sind. Beispielhaft sind die Anschlagkörper 95 derart bemessen und angeordnet, dass sie bereits in der Neutralstellung der Hilfsmasse 53 gegenüber dem Trägerkörper 52, wie sie in der Darstellung der Figur 2 gezeigt ist, in Kontakt mit der Hilfsmasse 53 stehen.

Rein exemplarisch ist am Werkstückträger 51 ein weiterer Beschleunigungssensor 96 angeordnet, der über eine Sensorleitung 97 und einen Steckverbinder 98 mit der Maschinensteuerung 2 elektrisch verbunden ist. Mit dem Beschleunigungssensor 96 können Schwingungsbewegungen des Werkstückträgers 51 ermittelt werden. Ein weiterer Beschleunigungssensor 99 ist an der Hilfsmasse 53 angebracht und steht über ein Sensorkabel 100 mit zugeordneten Steckverbindung 101 in elektrischer Verbindung mit der Maschinensteuerung 2. Der Beschleunigungssensor 99 ermöglicht eine Erfassung der Bewegungen der Hilfsmasse 53.

## Patentansprüche

1. Werkstücktisch (1), insbesondere Schwenkrundtisch, für eine Werkzeugmaschine, mit einem Grundträger (11), der eine Maschinenschnittstelle (15, 16) aufweist, die für eine Kopplung mit einem Maschinengestell einer Werkzeugmaschine ausgebildet ist, und der eine Trägeraufnahme (19) zur Kopplung mit einem Werkstückträger (51) aufweist, sowie mit einem Werkstückträger (51), der einen Trägerkörper (52), eine Hilfsmasse (53) und ein Zugstück (54) aufweist, wobei der Trägerkörper (52) an einer Oberseite (71) mit einer Werkstückaufnahme (56) zur Aufspannung eines Werkstücks versehen ist und an einer Unterseite einen Kupplungsabschnitt (59) zur Kopplung mit der Trägeraufnahme (19) aufweist, wobei die Hilfsmasse (53) linearbeweglich auf einer Berührfläche (61) des Trägerkörpers (52) gelagert ist und wobei das Zugstück (54) für eine Normalkraftübertragung zwischen Trägerkörper (52) und Hilfsmasse (53) ausgebildet ist, **dadurch gekennzeichnet, dass** die Hilfsmasse (53) einen größenveränderlichen Kontaktbereich (62; 74) mit der Berührfläche (61) bestimmt, so dass die Hilfsmasse (53) und die Berührfläche (61) einen Hilfsmassendämpfer mit einstellbarer Dämpfungswirkung bilden.

2. Werkstücktisch (1) nach Anspruch 1, **dadurch gekennzeichnet, dass** die Berührfläche (61) von einer Dämpfungsplatte (73) bestimmt wird, die aus einem Kunststoffmaterial hergestellt ist und die zumindest 10 Prozent einer Projektionsfläche der Hilfsmasse (53) auf den Trägerkörper (52) überdeckt.

3. Werkstücktisch (1) nach Anspruch 1 oder 2, **dadurch gekennzeichnet, dass** die Hilfsmasse (53) mit der Berührfläche (61) einen größenvariablen, vorzugsweise einen keilförmig profilierten, insbesondere einen nach außen verjüngten, Arbeitsspalt (55) begrenzt und/oder dass der Kontaktbereich (62; 74) angrenzend an eine Stirnfläche (78) der Hilfsmasse (53) angeordnet ist.

4. Werkstücktisch (1) nach Anspruch 1, 2 oder 3, **dadurch gekennzeichnet, dass** das Zugstück (54) mit einem ersten Endbereich (79) mit dem Trägerkörper (52) gekoppelt ist und mit einem zweiten Endbereich (80) mit der Hilfsmasse (53) gekoppelt ist und einen zwischen dem ersten Endbereich (79) und dem zweiten Endbereich (80) ausgebildeten Biegeabschnitt aufweist, der als Festkörperlager für eine Kopplung zwischen Trägerkörper (52) und Hilfsmasse (53) ausgebildet ist.

5. Werkstücktisch (1) nach Anspruch 1, 2 oder 3, **dadurch gekennzeichnet, dass** das Zugstück (54) mit einem ersten Endbereich (79) am Trägerkörper (52) festgelegt ist und dass zwischen einem zweiten Endbereich (80) des Zugstücks (54) und der Hilfsmasse (53) eine Koppelanordnung aus der Gruppe: Gleitlager, Wälzlager, Federelement, angeordnet ist.

6. Werkstücktisch (1) nach einem der Ansprüche, 1, 2 oder 3, **dadurch gekennzeichnet, dass** dem Trägerkörper (52) ein Aktor (3) zugeordnet ist, der für eine Normalkrafteinleitung auf das Zugstück (54) ausgebildet ist.

7. Werkstücktisch (1) nach Anspruch 6, **dadurch gekennzeichnet, dass** im Trägerkörper (52) eine Zylinderbohrung (82) ausgebildet ist und dass das Zugstück (54) an einer der Hilfsmasse (53) abgewandten Endbereich (79) mit einem Arbeitskolben (81) verbunden ist, der linearbeweglich abdichtend in der Zylinderbohrung (82) aufgenommen ist und der mit der Zylinderbohrung (82) wenigsten einen größenvariablen Fluidarbeitsraum (84) begrenzt und mit der Zylinderbohrung (82) einen Fluidaktor (3) bildet.

8. Werkstücktisch (1) nach einem der vorhergehenden Ansprüche, **dadurch gekennzeichnet, dass** am Grundträger (11) und/oder am Werkstückträger (51) und/oder an der Hilfsmasse (53) wenigstens ein Beschleunigungssensor (20; 96; 99) und/oder ein Geschwindigkeitssensor angeordnet ist, der zur Bereitstellung eines beschleunigungsabhängigen oder geschwindigkeitsabhängigen elektrischen Sensorsignals ausgebildet ist und/oder dass am Grundträger (11) und/oder am Werkstückträger (51) wenigstens ein Lagesensor angeordnet ist, der zur Bereitstellung eines elektrischen Sensorsignals in Abhängigkeit von einer räumlichen Ausrichtung des Grundträgers (11) ausgebildet ist.

9. Werkstücktisch (1) nach einem der vorhergehenden Ansprüche, **dadurch gekennzeichnet, dass** der Kontaktbereich (62; 74) einen maximalen Abstand (75) zu einem Massenmittelpunkt (67) der Hilfsmasse (53) aufweist, der einem Abstand der Stirnfläche (78) der Hilfsmasse (53) zum Massenmittelpunkt (67) entspricht und/oder dass die Hilfsmasse (53) gegenüber dem Trägerkörper (52) zwei lineare Freiheitsgrade (92, 93) der Bewegung aufweist, die eine Ebene aufspannen, die parallel zur Berührfläche (61) ausgerichtet ist.

10. Werkstücktisch (1) nach einem der vorhergehenden Ansprüche, **dadurch gekennzeichnet, dass** die Werkstückaufnahme (56) mehrere Spanneinheiten aufweist, die in einer Normalenrichtung von der Oberseite (71) des Trägerkörpers (52) abragen und dass die Hilfsmasse (53) und die Dämpfungsplatte (73) zwischen den Spanneinheiten erstreckt sind und/oder dass am Trägerkörper (52) benachbart zur Hilfsmasse (53) wenigstens ein Bewegungsanschlag (95) aus einem gummielastischen Material angeordnet ist, um eine Bewegungsamplitude der Hilfsmasse (53) zu begrenzen.

11. Verfahren zur Schwingungsdämpfung für einen Werkstücktisch (1), der beweglich an einem Maschinenrahmen einer Werkzeugmaschine angeordnet ist, mit den Schritten: Erfassen wenigstens einer physikalischen Größe aus der Gruppe: Schwenkwinkel des Werkstücktischs (1) gegenüber dem Maschinenrahmen, Schnittgeschwindigkeit eines Bearbeitungswerkzeugs, Materialeigenschaft eines Werkstücks, Vorschubgeschwindigkeit für ein Bearbeitungswerkzeug, Schnitttiefe für einen Eingriff eines Bearbeitungswerkzeugs in ein Werkstück, Schneidengeometrie eines Bearbeitungswerkzeugs, Abstand eines Eingriffs eines Bearbeitungswerkzeugs in ein Werkstück vom Werkstücktisch (1), Schwingungsbewegung eines Bearbeitungswerkzeugs, Schwingungsbewegung eines Werkstücks, Schwingungsbewegung des Werkstücktischs (1), Schwingungsbewegung einer beweglich am Werkstücktisch (1) gelagerten Hilfsmasse (53), Schwingungsbewegung des Maschinenrahmens, Schwingungsbewegung eines Achsschlittens, sowie Berechnen einer Schwingungsfrequenz und/oder einer Schwingungsamplitude für eine einer beweglich an einem Trägerkörper (52) des Werkstücktischs (1) gelagerten Hilfsmasse (53), um eine Dämpfungswirkung durch die Hilfsmasse (53) zu maximieren, Berechnen einer Normalkraft, die von der Hilfsmasse (53) auf eine am Trägerkörper (52) angebrachte Dämpfungsplatte (73) übertragen werden muss, um die berechnete Schwingungsfrequenz und/oder Schwingungsamplitude für die Hilfsmasse (53) einzustellen, Ausgeben der berechneten Normalkraft an eine Anzeigeeinrichtung und/oder an eine Steuereinrichtung (2) der Werkzeugmaschine.

12. Verfahren nach Anspruch 11, **dadurch gekennzeichnet, dass** in Abhängigkeit von der berechneten Normalkraft eine manuelle Krafteinstellung an einem Zugstück (54) vorgenommen wird, das die Hilfsmasse (53) mit dem Trägerkörper (52) verbindet, oder dass eine Bereitstellung von pneumatischer oder hydraulischer oder elektrischer Energie an einen am Trägerkörper (52) angeordneten Aktor (3) vorgenommen wird, um eine Einleitung der Normalkraft auf das Zugstück (54) zu bewirken, das, insbesondere über ein federelastisches Koppelelement (57), mit der Hilfsmasse (53) gekoppelt ist.

13. Verfahren nach Anspruch 12, **dadurch gekennzeichnet, dass** die Erfassung wenigstens einer physikalischen Größe durch einen Sensor (20; 96; 99) erfolgt, der elektrisch mit einer Steuereinrichtung (2) verbunden ist und dass in der Steuereinrichtung (2) in Abhängigkeit von einem Sensorsignal des Sensors (20; 96; 99) die Berechnung der Schwingungsfrequenz und/oder der Schwingungsamplitude für die Hilfsmasse (53) und die daraus resultierende Normalkraft vorgenommen wird.

14. Verfahren nach Anspruch 12 oder 13, **dadurch gekennzeichnet, dass** die Erfassung wenigstens einer physikalischen Größe aus einem Maschinenprogramm der Werkzeugmaschine erfolgt, in dem Parameter für einen Bearbeitungsvorgang für ein Werkstück enthalten sind.

15. Verfahren nach Anspruch 14, **dadurch gekennzeichnet, dass** die Erfassung wenigstens einer physikalischen Größe aus dem Maschinenprogramm für den Bearbeitungsschritt für das Werkstück vorauseilend unter Berücksichtigung einer Verarbeitungsdauer der Steuereinrichtung (2) und eines Bewegungsverhaltens des Aktors (3) vorgenommen wird.
